# EUROPÄISCHE PATENTSCHRIFT

(11) **EP 2 602 497 B1**
(45) Veröffentlichungstag und Bekanntmachung des Hinweises auf die Patenterteilung: **10.04.2019**
(21) Anmeldenummer: 12195286.5
(22) Anmeldetag: 03.12.2012
(51) Int. Cl.: F16C 3/02, F16L 13/00

(54) **Verbindung zwischen zwei Bauteilen und Verfahren zur Verbindung zweier Bauteile**
Connection between two components and method for connecting two components
Liaison entre deux composants et procédé de liaison de deux composants

(30) Priorität: 05.12.2011 EP 11191964
(43) Veröffentlichungstag der Anmeldung: 12.06.2013
(73) Patentinhaber: Magna Steyr Fahrzeugtechnik AG & Co KG, 8041 Graz (AT)
(72) Erfinder: Auer, Thomas, 9363 Metnitz (AT); Dietz, Wolfgang, 8081 Pirching (AT); Krammer, Christoph, 8530 Deutschlandsberg (AT); Pretzler, Andrea, 8611 St. Katharein/Lmg (AT)
(74) Vertreter: Zangger, Bernd

(56) Entgegenhaltungen:
- FR-A- 1 434 084
- US-A- 3 938 285
- US-A- 4 407 528
- US-A- 4 792 320
- US-A- 5 732 743

## Beschreibung

Die vorliegende Erfindung betrifft eine Verbindung zwischen zwei Bauteilen, wobei die beiden Bauteile Steckabschnitte mit Profilen aufweisen, die ineinander steckbar sind und ein Verfahren zur Verbindung zweier Bauteile, wobei die beiden Bauteile Steckabschnitte mit Profilen aufweisen, die ineinander steckbar sind.

Das einfache Ineinanderstecken von derartigen Bauteilen reicht oft nicht aus um eine stabile Verbindung herzustellen, daher ist es beispielsweise bekannt die Verbindungsbereiche zusätzlich zu kleben, zu verschweißen, zu nieten oder zu verschrauben. Insbesondere wenn eines der beiden Bauteile aus faserverstärktem Kunststoff besteht und das weitere Bauteil entweder ebenfalls aus faserverstärktem Kunststoff oder auch aus einem anderen Material hergestellt ist, wurden auch andere Verbindungsmethoden, wie die Verwendung von Inserts oder Flanschen als Verbindungselemente vorgeschlagen. Hierdurch werden jedoch separat vorgefertigte Verbindungselemente benötigt. Vor allem wenn die beiden Bauteile oder Bauteile und Verbindungselemente aus unterschiedlichen Materialien bestehen sind die genannten Verbindungen oft unzureichend, da es zu unterschiedlichem Wärmeausdehnungsverhalten und unterschiedlicher Korrosion der Bauteile kommt.

Ein Verfahren zur Verbindung zweier Stabenden aus faserverstärktem Kunststoff ist beispielsweise aus der DE 3508644 A1 bekannt. Bei diesem Verfahren werden die Enden der zu verbindenden Stäbe abgeschrägt und hierauf fluchtgerecht miteinander verklebt.

Die EP 0 059 163 A1 offenbart eine Verbindung zwischen einer Hohlwelle aus faserverstärktem Kunststoff und einem Metallelement, wobei das Metallelement einen inneren Ring aufweist, der innen an der Wand der Hohlwelle anliegt und ein weiterer Metallring als äußerer Ring verwendet wird, so dass die Hohlwelle aus faserverstärktem Kunststoff zwischen den beiden Metallringen eingespannt ist. Die Verbindung wird hergestellt indem zuerst der äußere der beiden Ringe auf die Welle und dann diese zusammen mit dem äußerem Ring auf den inneren Ring thermisch aufgeschrumpft werden.

Die US 4 792 320 A offenbart eine zusammengesetzte Röhrenstruktur, umfassend ein rohrförmiges Element aus faserverstärktem Harz mit einem einheitlichen Innendurchmesser, einen an einem Ende des rohrförmigen Elements befestigten Bügel und eine Hülse, die überlappend mit einem Ende des rohrförmigen Elements angeordnet ist, sowie eine Vielzahl von in Umfangsrichtung beabstandeten Rippen an der Hülse, wobei die Rippen von der Hülse radial nach außen vorstehen, wobei das Ende des rohrförmigen Teils eine Vielzahl von in Umfangsrichtung beabstandeten Längsschlitzen zur Aufnahme der entsprechenden Rippen und eine zwischen jedem Paar benachbarter Längsschlitze angeordnete Zunge aufweist.

Die bekannten Verbindungen sind somit teils wenig zuverlässig und andererseits komplex und aufwändig in der Herstellung.

Es ist eine Aufgabe der Erfindung, Verbindungen zwischen zwei Bauteilen der genannten Art in dieser Hinsicht zu verbessern und insbesondere eine effiziente und einfach herzustellende Verbindung anzugeben. Weiters ist es eine Aufgabe der Erfindung ein Verfahren zur Verbindung zweier Bauteile der genannten Art anzugeben.

Die Lösung der Aufgabe erfolgt durch eine Verbindung zwischen zwei Bauteilen, wobei die beiden Bauteile Steckabschnitte mit Profilen aufweisen, die ineinander steckbar sind, wobei die Steckabschnitte der beiden Bauteile in einem Überlappungsbereich ineinander gesteckt sind und ein Wickelbereich der beiden Bauteile, der sich über den gesamten Überlappungsbereich erstreckt und beiderseits über den Überlappungsbereich hinausreicht, mit einer Wicklung aus faserverstärktem Kunststoff umwickelt ist, wobei beide Bauteile im Wickelbereich, außerhalb des Überlappungsbereichs, zumindest eine umlaufende Ausformung aufweisen, so dass die Wicklung aus faserverstärktem Kunststoff formschlüssig mit den Ausformungen verbunden ist.

Weiters erfolgt die Lösung der erfindungsgemäßen Aufgabe mit einem Verfahren zur Verbindung zweier Bauteile, wobei die beiden Bauteile Steckabschnitte mit Profilen aufweisen, die ineinander steckbar sind, umfassend die Verfahrensschritte
- Ineinanderstecken der beiden Steckabschnitte der beiden Bauteile in einem Überlappungsbereich,
- Umwickeln eines Wickelbereiches der beiden Bauteile, der sich über den gesamten Überlappungsbereich erstreckt und beiderseits über den Überlappungsbereich hinausreicht, mit einer Wicklung umfassend faserverstärkten Kunststoff,
- Aushärten eines Matrix-Materials der Wicklung in einem Werkzeug.

Die beiden Bauteile sind also erfindungsgemäß an deren Steckabschnitten ineinandergesteckt. Damit die Steckabschnitte ineinander steckbar sind, müssen beide Bauteile ähnliche Profile mit ähnlichen Dimensionen, beispielsweise ähnlichen Durchmessern, aufweisen, die vorzugsweise als geschlossene runde, rechteckige oder quadratische Profile ausgeführt sein können. Weiters sind die beiden Bauteile mit faserverstärktem Kunststoff umwickelt, wobei der Bereich der Wicklung sich über den gesamten Abschnitt der Bauteile erstreckt, in dem sich die Profile auch überlappen. Erfindungsgemäß ist zumindest der gesamte Überlappungsbereich auch umwickelt.

Erfindungsgemäß erstreckt sich der Wickelbereich einer Verbindung über den gesamten Überlappungsbereich und reicht beiderseits über den Überlappungsbereich hinaus. Auf diese Weise wird eine ausreichende Wicklung mit Fasermaterial erzielt, so dass eine stabile kraftschlüssige Verbindung gewährleistet ist.

Erfindungsgemäß weisen beide Bauteile im Wickelbereich zumindest eine Ausformung auf, so dass die Wicklung aus faserverstärktem Kunststoff formschlüssig mit der jeweiligen Ausformung verbunden ist. Dadurch wird zusätzlich zur kraftschlüssigen Kraftkomponente auch ein stabiler Formschluss erreicht, durch den insbesondere ein axiales Herausgleiten entlang der Achse des Ineinandersteckens der beiden Bauteile vermieden wird. Auf diese Weise wirken bevorzugt die Matrix und die Faser der Wicklung in der Ausformung Kräften entlang der Bauteilachse entgegen.

Das Fasermaterial des faserverstärkten Kunststoffes kann dabei vorteilhaft aus anorganischen oder organischen Verstärkungsfasern bestehen, wie zum Beispiel aus Glasfasern, Kevlarfasern, Aramidfasern, Carbonfasern, Pflanzenfasern, Gesteinsfasern oder Gemische derselben, welche beispielsweise in Form von Fasersträngen, Fasergeweben, Fasergeflechten, Fasergestricken und/oder Faservliesen vorliegen.

Das Matrix-Material des faserverstärkten Kunststoffes kann eine duroplastische oder auch thermoplastische Matrix sein, wie zum Beispiel Polypropylen, Polyphenylensulfid, Polyetheretherketon, Polyesterharz oder Epoxidharz oder auch eine elastomere Matrix wie Gummi oder Polyurethan.

In einer Ausführungsform können die beiden Bauteile aus unterschiedlichen Materialien bestehen.

Beispielsweise ist die erfindungsgemäße Verbindung vorteilhaft einsetzbar wenn zumindest einer der beiden Bauteile aus faserverstärktem Kunststoff besteht. Besonders bevorzugt bestehen beide Bauteile aus faserverstärktem Kunststoff. Da sowohl eines oder beide Bauteile als auch die Wicklung aus faserverstärktem Kunststoff bestehen, werden Probleme mit unterschiedlichen Werkstoffen, wie unterschiedliche Wärmeausdehnungen und Kontaktkorrosion vermieden.

Dabei ist die zumindest eine Ausformung bevorzugt eine in Umfangsrichtung des geschlossenen Profils des zumindest einen Bauteils umlaufende Verjüngung, Abstufung oder Nut, also insbesondere eine umlaufende Rille. Hierdurch wird ein Formschluss in Längsrichtung der Bauteile erreicht.

Bevorzugt kann die Ausformung so ausgeführt sein, dass zusätzlich oder alternativ zum Formschluss in Längsrichtung ein Formschluss gegen Verdrehung, also quer zur Längsrichtung der Bauteile erreicht wird.

In einer Ausführungsform umfasst eine erfindungsgemäße Verbindung einen dritten Bauteil, der einen Steckabschnitt aufweist, wobei die Steckabschnitte der drei Bauteile in einem Überlappungsbereich ineinander gesteckt sind und ein Wickelbereich der drei Bauteile, der mindestens teilweise mit dem Überlappungsbereich zusammenfällt, mit einer Wicklung aus faserverstärktem Kunststoff umwickelt ist. Durch das erfindungsgemäße Verbinden von drei Bauteilen ist es beispielsweise möglich eine stabile T-Verbindung aus drei Bauteilen aufzubauen. Dabei weisen besonders bevorzugt alle drei Bauteile zumindest je eine radiale Rille auf, die formschlüssig umwickelt wird.

Erfindungsgemäß kann eine T-Verbindung oder X-Verbindung auch aus lediglich zwei Bauteilen aufgebaut werden. Dabei weist das erste Bauteil bevorzugt zumindest eine seitliche Öffnung auf, und ein Ende des zweiten Bauteils wird, beispielsweise im rechten Winkel, in die Öffnung des ersten Bauteils eingesteckt. Die Öffnung des ersten Bauteils und das Ende des zweiten Bauteils bildet dann die Steckabschnitte. Der Überlappungsbereich ist dadurch ausgebildet, dass das Ende des zweiten Bauteils in den ersten Bauteil hineinragt. Der erste Bauteil kann bevorzugt zu beiden Seiten der Öffnung radial umlaufende Ausformungen aufweisen, der zweite Bauteil nahe dessen eingestecktem Ende eine weitere radial umlaufende Ausformung. Die Wicklung mit faserverstärktem Kunststoff, und daher der Wickelbereich, wird dann vorteilhaft alle drei Ausformungen formschlüssig bedecken.

Zur Herstellung einer erfindungsgemäßen Verbindung dient das erwähnte erfindungsgemäße Verfahren das zumindest folgende Schritte umfasst:
- Ineinanderstecken der beiden Steckabschnitte der beiden Bauteile in einem Überlappungsbereich,
- Umwickeln eines Wickelbereiches der beiden Bauteile, der sich über den gesamten Überlappungsbereich erstreckt und beiderseits über den Überlappungsbereich hinausreicht, mit einer Wicklung umfassend faserverstärkten Kunststoff,
- Aushärten eines Matrix-Materials der Wicklung in einem Werkzeug.

Dabei kann die Wicklung, die Fasermaterial umfasst, zum Zeitpunkt des Umwickelns bereits das Matrix-Material enthalten, also als vorimprägniertes Halbzeug (sog. Prepregs) ausgebildet sein. Dadurch ist es nicht erforderlich zu einem späteren Zeitpunkt der Wicklung Matrix-Material beizugeben.

In einer Ausführungsform des Verfahrens zur Verbindung zweier Bauteile ist die Wicklung zum Zeitpunkt des Umwickelns ein trockenes Fasermaterial ohne Matrix-Material. Nach dem Umwickeln der Bauteile wird in diesem Fall ein Matrix-Material in das Fasermaterial eingebracht.

Bevorzugt wird das Matrix-Material nach dem Umwickeln in einem Werkzeug in das Fasermaterial injiziert oder eingegossen.

Die Erfindung wird im Folgenden beispielhaft unter Bezugnahme auf die Zeichnungen beschrieben.
- Fig. 1: ist eine 3D-Darstellung eines ersten Schrittes eines erfindungsgemäßen Verfahrens.
- Fig. 2: ist eine 3D-Darstellung eines zweiten Schrittes eines erfindungsgemäßen Verfahrens.
- Fig. 3: ist eine 3D-Darstellung eines dritten Schrittes eines erfindungsgemäßen Verfahrens.
- Fig. 4: ist eine 3D-Darstellung einer erfindungsgemäßen Verbindung zwischen zwei Bauteilen mit kreisförmigem Profil.
- Fig. 5: ist eine 3D-Darstellung eines Bauteiles mit dreieckigem Profil zur Nutzung in einer erfindungsgemäßen Verbindung.
- Fig. 6: ist eine 3D-Darstellung eines Bauteiles mit Hohlkammer-Profil zur Nutzung in einer erfindungsgemäßen Verbindung.
- Fig. 7: ist eine dreidimensionale Schnittdarstellung einer erfindungsgemäßen Verbindung zwischen zwei Bauteilen mit einem Vierkant-Profil.
- Fig. 8: ist eine dreidimensionale Schnittdarstellung einer erfindungsgemäßen Verbindung zwischen drei Bauteilen zu einem T-Stück.

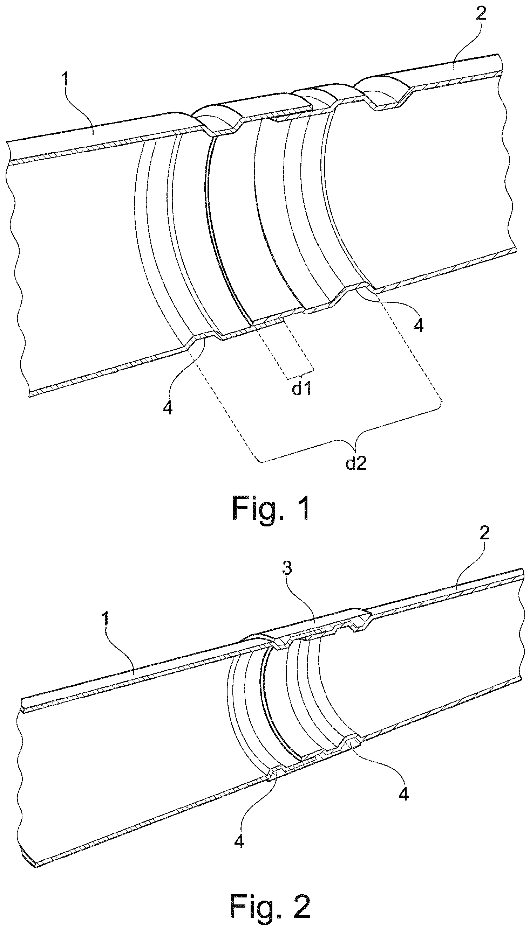

In den Fig. 1-3 ist ein erfindungsgemäßes Verfahren zur Verbindung zweier Bauteile 1 und 2 dargestellt, wobei die beiden Bauteile 1 und 2 Steckabschnitte aufweisen, die ineinander steckbar sind. Die Bauteile können dabei eigens ausgeformte Steckabschnitte aufweisen oder auch, wie in den Figuren dargestellt, zur Gänze so ausgebildet sein, dass sie ineinander steckbar sind.

Fig. 1 zeigt dabei den ersten Verfahrensschritt, in dem die beiden Steckabschnitte der beiden Bauteile 1 und 2 in einem Überlappungsbereich d1 ineinander gesteckt werden. Der Überlappungsbereich d1 ist in Richtung des Ineinandersteckens kleiner als der vorgesehene Wickelbereich d2 und stellt einen Teilbereich des Wickelbereichs d2 dar. An beiden Bauteilen 1 und 2 sind um die Profile der Steckabschnitte umlaufende Ausformungen 4 ausgebildet, die als Nuten mit schrägen Wänden ausgeführt sind. Die Nuten liegen bei beiden Bauteilen 1 und 2 außerhalb des Überlappungsbereiches d1, jedoch innerhalb des Wickelbereiches d2.

In Fig. 2 ist ein weiterer Verfahrensschritt dargestellt, in dem der Wickelbereich der beiden Bauteile 1 und 2 mit einer Wicklung 3 aus Fasermaterial umwickelt ist. Die Wicklung 3 kann dabei aus bereits vorimprägnierten oder auch aus trockenen Fasern ohne Matrix-Material bestehen. Die Wicklung 3 kommt dabei auch innerhalb der Ausformungen 4 der beiden Bauteile 1 und 2 zu liegen.

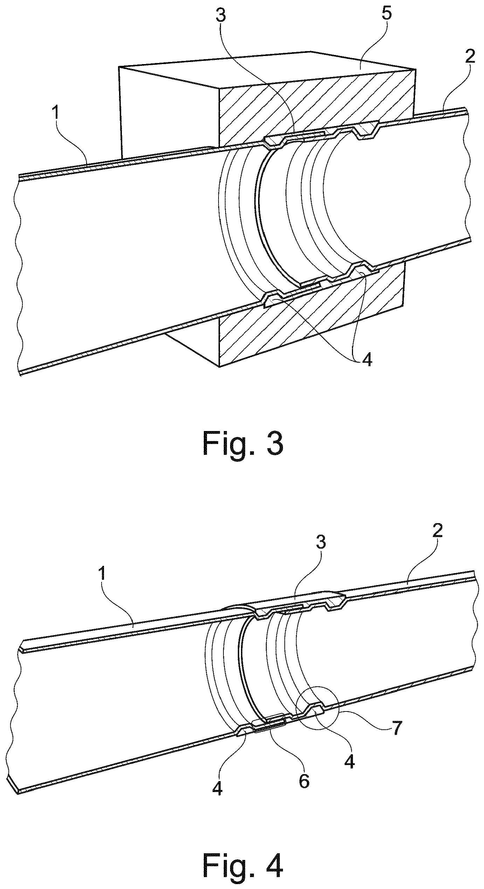

Wie in Fig. 3 dargestellt wird nach dem Aufbringen der Wicklung 3 zumindest der Verbindungsbereich der beiden Bauteile 1 und 2 in ein Werkzeug 5 eingelegt. In die Wicklung 3 kann erforderlichenfalls im Werkzeug 5 noch eine Kunststoff-Matrix injiziert werden. Der faserverstärkte Kunststoff härtet im Werkzeug 5 in bekannter Weise aus, beispielsweise auf chemischem Weg. Anschließend kann der fertiggestellte Verbund aus Bauteil 1, Bauteil 2 und Wicklung 3 aus dem Werkzeug 5 entnommen werden.

Fig. 4 stellt erfindungsgemäß miteinander verbundene Bauteile 1 und 2 dar, die in einem Überlappungsbereich in Richtung einer gemeinsamen Längsachse der Bauteile ineinander gesteckt sind, und in einem Wickelbereich mit einer bereits ausgehärteten Wicklung 3 aus faserverstärktem Kunststoff bedeckt sind. Im Überlappungsbereich kommt es dabei zur Ausbildung einer Zone 6 mit kraftschlüssiger Verbindung zwischen den beiden Bauteilen 1 und 2 und zur Ausbildung von Zonen 7 mit formschlüssiger Verbindung zwischen den Ausnehmungen 4 der Bauteile 1 und 2 und der Wicklung 3.

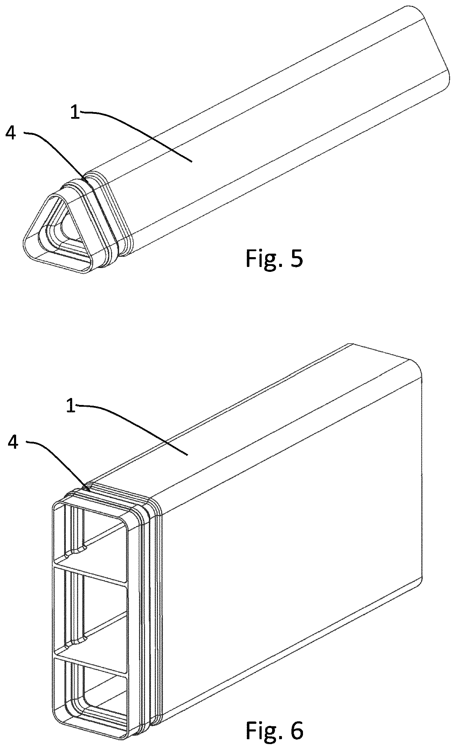

Fig. 5 stellt ein Bauteil 1 mit dreieckigem Profil dar, dass zur Nutzung in einer erfindungsgemäßen Verbindung vorbereitet ist. Dazu weist das Bauteil 1 eine umlaufende Rille als Ausformung 4 auf. In das Bauteil 1 kann beispielsweise ein weiteres zumindest annähernd gleichartiges Bauteil 1 gesteckt werden, und im Bereich des Ausformung 4 mit faserverstärktem Kunststoff umwickelt werden.

Ähnlich der Fig. 5 stellt Fig. 6 ein Bauteil 1 mit Hohlkammer-Profil dar, dass außen umlaufend ebenfalls eine Ausformung 4 aufweist, zur Nutzung in einer erfindungsgemäßen Verbindung.

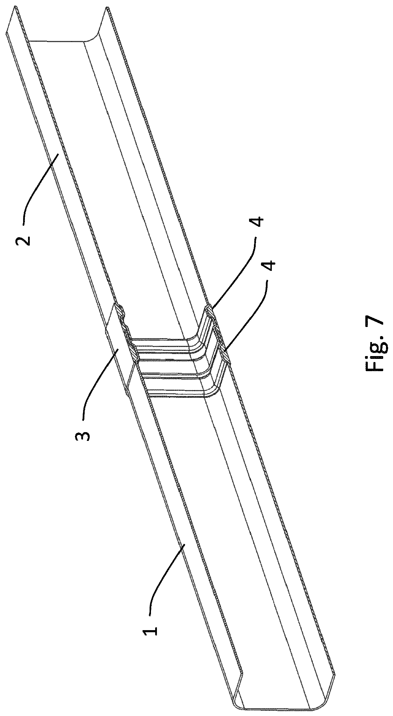

Fig. 7 ist eine dreidimensionale Schnittdarstellung einer erfindungsgemäßen Verbindung zwischen zwei Bauteilen 1 und 2 mit einem geschlossenen Vierkant-Profil.

Eine der Fig. 7 entsprechende offene Form, beispielsweise U-Form, von verbundenen Bauteilen 1 kann jedoch auch als Ergebnis eines erfindungsgemäßen Verbindungsverfahrens hergestellt werden, insbesondere wenn miteinander verbundene geschlossene Bauteile 1 nach dem Umwickeln und bevorzugt nach dem Aushärten entlang der Längsachse in zwei annähernd U-förmige Hälften getrennt werden.

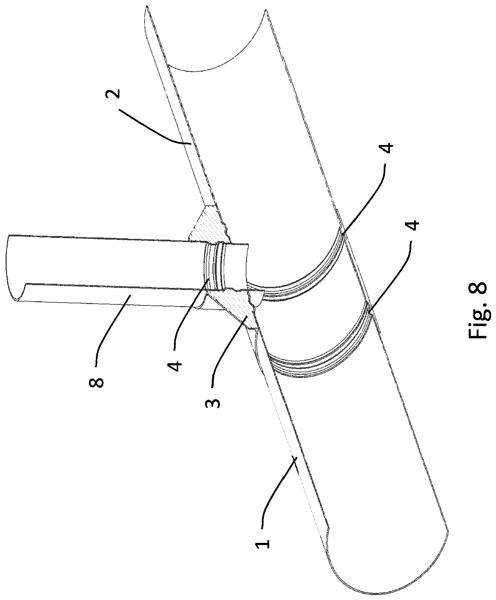

Fig. 8 ist eine dreidimensionale Schnittdarstellung einer erfindungsgemäßen Verbindung zwischen drei Bauteilen 1, 2 und 8, die zusammen ein T-Stück bilden. Hierbei kann jedes der Bauteile 1, 2, 8 eine Ausformung 4, insbesondere eine Rille, aufweisen. Alternativ kann die Fig. 8 als T-Verbindung lediglich zweier Bauteile gesehen werden, wobei dann eines der beiden Bauteile, dass durch 1 und 2 gebildet ist, ein durchgehendes Profil mit zwei Ausformungen 4 links und rechts einer seitlichen Öffnung darstellt, und das andere Bauteil, durch 8 gebildet, in die Öffnung des durchgehenden Profils 1, 2 eingesteckt ist. Der gesamte Bereich der Verbindung, der die drei Ausformungen 4 umfasst, ist mit faserverstärktem Kunststoff umwickelt.

Die Erfindung ermöglicht somit eine einfache und zuverlässige Verbindung zwischen zwei Bauteilen.

### Bezugszeichenliste

- 1: erster Bauteil
- 2: zweiter Bauteil
- 3: Wicklung
- 4: Ausformung
- 5: Werkzeug
- 6: Zone mit kraftschlüssiger Verbindung
- 7: Zone mit formschlüssiger Verbindung
- 8: dritter Bauteil

- d1: Überlappungsbereich
- d2: Wickelbereich

## Patentansprüche

1. Verbindung zwischen zwei Bauteilen (1, 2), wobei die beiden Bauteile (1, 2) Steckabschnitte mit Profilen aufweisen, die ineinander steckbar sind, wobei die Steckabschnitte der beiden Bauteile (1, 2) in einem Überlappungsbereich (d1) ineinander gesteckt sind und ein Wickelbereich (d2) der beiden Bauteile (1, 2), der sich über den gesamten Überlappungsbereich (d1) erstreckt und beiderseits über den Überlappungsbereich (d1) hinausreicht, mit einer Wicklung (3) aus faserverstärktem Kunststoff umwickelt ist, **dadurch gekennzeichnet, dass** beide Bauteile (1, 2) im Wickelbereich (d2), außerhalb des Überlappungsbereichs (d1), zumindest eine umlaufende Ausformung (4) aufweisen, so dass die Wicklung (3) aus faserverstärktem Kunststoff formschlüssig mit den Ausformungen (4) verbunden ist.

2. Verbindung nach Anspruch 1,
**dadurch gekennzeichnet, dass** die beiden Bauteile (1, 2) aus unterschiedlichen Materialien bestehen.

3. Verbindung nach einem der zuvor genannten Ansprüche,
**dadurch gekennzeichnet, dass** zumindest einer der beiden Bauteile (1, 2), bevorzugt beide Bauteile (1, 2) aus faserverstärktem Kunststoff bestehen.

4. Verbindung nach einem der zuvor genannten Ansprüche,
**dadurch gekennzeichnet, dass** die Ausformungen (4) in Umfangsrichtung des geschlossenen Profils des jeweiligen Bauteils (1, 2) umlaufende Verjüngungen, Abstufungen, Rillen oder Nuten sind.

5. Verbindung nach einem der zuvor genannten Ansprüche,
**gekennzeichnet durch**, einen dritten Bauteil (8) der einen Steckabschnitt aufweist, wobei die Steckabschnitte der drei Bauteile (1, 2, 8) in einem Überlappungsbereich (d1) ineinander gesteckt sind und ein Wickelbereich (d2) der drei Bauteile (1, 2, 8), der sich über den gesamten Überlappungsbereich (d1) erstreckt und allseitig über den Überlappungsbereich (d2) hinausreicht, mit einer Wicklung (3) aus faserverstärktem Kunststoff umwickelt ist.

6. Verfahren zur Verbindung zweier Bauteile (1, 2), wobei die beiden Bauteile (1, 2) Steckabschnitte mit Profilen aufweisen, die ineinander steckbar sind, umfassend folgende
Verfahrensschritte:
- Ineinanderstecken der beiden Steckabschnitte der beiden Bauteile (1, 2) in einem Überlappungsbereich (d1),
- Umwickeln eines Wickelbereiches (d2) der beiden Bauteile (1, 2), der sich über den gesamten Überlappungsbereich (d1) erstreckt und beiderseits über den Überlappungsbereich (d2) hinausreicht, mit einer Wicklung (3) umfassend faserverstärkten Kunststoff, wobei beide Bauteile (1, 2) im Wickelbereich (d2), außerhalb des Überlappungsbereichs (d1), zumindest eine umlaufende Ausformung (4) aufweisen, so dass die Wicklung (3) aus faserverstärktem Kunststoff formschlüssig mit den Ausformungen (4) verbunden ist,
- Aushärten eines Matrix-Materials der Wicklung (3) in einem Werkzeug (5).

7. Verfahren zur Verbindung zweier Bauteile (1, 2) nach Anspruch 6, **gekennzeichnet dadurch, dass** die Wicklung (3) zum Zeitpunkt des Umwickelns bereits das Matrix-Material enthält, also als vorimprägniertes Halbzeug ausgebildet ist.

8. Verfahren zur Verbindung zweier Bauteile (1, 2) nach Anspruch 6, **gekennzeichnet dadurch, dass** die Wicklung (3) zum Zeitpunkt des Umwickelns ein trockenes Fasermaterial ohne Matrix-Material ist und das nach dem Umwickeln ein Matrix-Material in das Fasermaterial eingebracht wird.

9. Verfahren zur Verbindung zweier Bauteile (1, 2) nach Anspruch 8, **gekennzeichnet dadurch, dass** das Matrix-Material nach dem Umwickeln in einem Werkzeug (5) in das Fasermaterial injiziert oder eingegossen wird.

## Claims

1. Connection between two components (1, 2), the two components (1, 2) having plug-together portions with profiles which can be plugged into one another, the plug-together portions of the two components (1, 2) being plugged into one another in an overlapping region (d1), and a winding region (d2) of the two components (1, 2) which extends over the entire overlapping region (d1) and reaches beyond the overlapping region (d1) on both sides being wound around by a winding (3) of fiber-reinforced plastic, **characterized in that** the two components (1, 2) have at least one running-around formation (4) in the winding region (d2), outside the overlapping region (d1), so that the winding (3) of fiber-reinforced plastic is connected to the formations (4) with interlocking engagement.

2. Connection according to Claim 1,
**characterized in that** the two components (1, 2) consist of different materials.

3. Connection according to one of the preceding claims,
**characterized in that** at least one of the two components (1, 2), preferably both components (1, 2), consist(s) of fiber-reinforced plastic.

4. Connection according to one of the preceding claims,
**characterized in that** the formations (4) are constrictions, stepped recesses, channels or grooves running around in the circumferential direction of the closed profile of the respective component (1, 2).

5. Connection according to one of the preceding claims,
**characterized by** a third component (8), which has a plug-together portion, the plug-together portions of the three components (1, 2, 8) being plugged into one another in an overlapping region (d1), and a winding region (d2) of the three components (1, 2, 8) which extends over the entire overlapping region (d1) and reaches beyond the overlapping region (d2) on all sides being wound around by a winding (3) of fiber-reinforced plastic.

6. Method for connecting two components (1, 2), the two components (1, 2) having plug-together portions with profiles which can be plugged into one another, comprising the following method steps:
- plugging the two plug-together portions of the two components (1, 2) into one another in an overlapping region (d1),
- winding around a winding region (d2) of the two components (1, 2) which extends over the entire overlapping region (d1) and reaches beyond the overlapping region (d2) on both sides a winding (3) comprising fiber-reinforced plastic, the two components (1, 2) having at least one running-around formation (4) in the winding region (d2), outside the overlapping region (d1), so that the winding (3) of fiber-reinforced plastic is connected to the formations (4) with interlocking engagement,
- curing a matrix material of the winding (3) in a mold (5).

7. Method for connecting two components (1, 2) according to Claim 6,
**characterized in that** the winding (3) at the time of winding around already contains the matrix material, that is to say is formed as a preimpregnated semifinished product.

8. Method for connecting two components (1, 2) according to Claim 6,
**characterized in that** the winding (3) is at the time of winding around a dry fiber material without matrix material and **in that** a matrix material is introduced into the fiber material after the winding around.

9. Method for connecting two components (1, 2) according to Claim 8,
**characterized in that** the matrix material is injected or poured into the fiber material in a mold (5) after the winding around.

## Revendications

1. Liaison entre deux composants (1, 2), les deux composants (1, 2) présentant des portions d'enfichage avec des profilés qui peuvent être enfichés les uns dans les autres, les portions d'enfichage des deux composants (1, 2) étant enfichées les unes dans les autres dans une région de chevauchement (d1) et une région d'enveloppement (d2) des deux composants (1, 2), qui s'étend sur toute la région de chevauchement (d1) et qui dépasse des deux côtés au-delà de la région de chevauchement (d1), étant enveloppée avec un enveloppement (3) en plastique renforcé par des fibres,
**caractérisée en ce que** les deux composants (1, 2) présentent, dans la région d'enveloppement (d2), à l'extérieur de la région de chevauchement (d1), au moins une formation périphérique (4) de telle sorte que l'enveloppement (3) en plastique renforcé par des fibres soit relié par engagement positif avec les formations (4).

2. Liaison selon la revendication 1,
**caractérisée en ce que** les deux composants (1, 2) se composent de matériaux différents.

3. Liaison selon l'une des revendications précédentes,
**caractérisée en ce qu'**au moins l'un des deux composants (1, 2), de préférence les deux composants (1, 2), se compose de plastique renforcé par des fibres.

4. Liaison selon l'une des revendications précédentes,
**caractérisée en ce que** les formations (4) dans la direction périphérique du profilé fermé de chaque composant (1, 2) sont des rétrécissements, des gradins, des sillons ou des rainures sur la périphérie.

5. Liaison selon l'une des revendications précédentes,
**caractérisée par** un troisième composant (8) qui présente une portion d'enfichage, les portions d'enfichage des trois composants (1, 2, 8) étant enfichées les unes dans les autres dans une région de chevauchement (d1) et une région d'enveloppement (d2) des trois composants (1, 2, 8), qui s'étend sur toute la région de chevauchement (d1) et qui dépasse de tous les côtés au-delà de la région de chevauchement (d2), étant enveloppée avec un enveloppement (3) en plastique renforcé par des fibres.

6. Procédé de liaison de deux composants (1, 2), les deux composants (1, 2) présentant des portions d'enfichage avec des profilés qui peuvent être enfichés les uns dans les autres, comprenant les étapes de procédé suivantes :
- enfichage l'une dans l'autre des deux portions d'enfichage des deux composants (1, 2) dans une région de chevauchement (d1),
- enveloppement d'une région d'enveloppement (d2) des deux composants (1, 2), qui s'étend sur toute la région de chevauchement (d1) et qui dépasse des deux côtés au-delà de la région de chevauchement (d2), avec un enveloppement (3) comprenant du plastique renforcé par des fibres, les deux composants (1, 2) dans la région d'enveloppement (d2) à l'extérieur de la région de chevauchement (d1), présentant au moins une formation périphérique (4) de telle sorte que l'enveloppement (3) en plastique renforcé par des fibres soit relié par engagement positif aux formations (4),
- durcissement d'un matériau de matrice de l'enveloppement (3) dans un outil (5).

7. Procédé de liaison de deux composants (1, 2) selon la revendication 6,
**caractérisé en ce que** l'enveloppement (3) à l'instant de l'enveloppement contient déjà le matériau de matrice, c'est-à-dire qu'il est réalisé sous forme de produit semi-fini pré-imprégné.

8. Procédé de liaison de deux composants (1, 2) selon la revendication 6,
**caractérisé en ce que** l'enveloppement (3), à l'instant de l'enveloppement, est un matériau fibreux sec sans matériau de matrice et **en ce que** un matériau de matrice est introduit après l'enveloppement dans le matériau fibreux.

9. Procédé de liaison de deux composants (1, 2) selon la revendication 8,
**caractérisé en ce que** le matériau de matrice est injecté ou coulé après l'enveloppement dans un outil (5) dans le matériau fibreux.
